# EUROPÄISCHE PATENTSCHRIFT

(11) **EP 3 617 574 B1**
(45) Veröffentlichungstag und Bekanntmachung des Hinweises auf die Patenterteilung: **01.12.2021**
(21) Anmeldenummer: 18191729.5
(22) Anmeldetag: 30.08.2018
(51) Int. Cl.: F16L 3/237, H02G 3/32, F16L 3/06

(54) **KLEMME UND ARBEITSGERÄT MIT EINER KLEMME**
CLAMP AND WORKING MACHINE COMPRISING A CLAMP
PINCE ET APPAREIL DE TRAVAIL DOTÉ D'UNE PINCE

(43) Veröffentlichungstag der Anmeldung: 04.03.2020
(73) Patentinhaber: Andreas Stihl AG & Co. KG, 71336 Waiblingen (DE)
(72) Erfinder: Förg, Timo, 71522 Backnang (DE); Dworschak, Jan, 71336 Waiblingen (DE)
(74) Vertreter: Reinhardt, Annette

(56) Entgegenhaltungen:
- WO-A1-2004/064215
- DE-A1- 19 704 628
- DE-A1-102008 046 134
- US-A- 4 361 937

## Beschreibung

Die Erfindung betrifft eine Klemme nach dem Oberbegriff des Anspruchs 1 und ein Arbeitsgerät nach dem Oberbegriff des Anspruchs 15.

Zur Befestigung von länglichen Elementen wie Kabeln, Leitungen oder Schläuchen an einem Träger eines Arbeitsgeräts, beispielsweise dem Führungsrohr einer Motorsense sind Kunststoffklemmen mit einem einzigen Aufnahmeraum bekannt. In dem Aufnahmeraum ist sowohl das Führungsrohr als auch das Kabel angeordnet. Zur Befestigung des Kabels am Führungsrohr kann die Klemme durch Aufspreizen an einer Unterbrechung gleichzeitig über das Führungsrohr und das Kabel gesteckt werden. Nach Beendigung des Aufspreizens federt die elastische Klemme zurück in ihren Ausgangszustand. Es hat sich gezeigt, dass derartige Klemmen leicht versehentlich vom Führungsrohr abgezogen werden können.

Aus der DE 197 04 628 A1 ist ein Schlauchbinder mit zwei Aufnahmebereichen bekannt, die gemeinsam einen Aufnahmeraum bilden. Im einem der beiden Aufnahmebereiche ist ein Verschluss angeordnet.

Aus der US 4,361,937 A ist eine Klemme zur Befestigung eines Kabels an einem Pumprohr eines Brunnens bekannt. Die Klemme weist einen Verschluss im Bereich des Pumprohrs auf.

Aus der WO 2004/064215 A1 ist eine Klemme zur Befestigung eines Kabels an einem Rohr bekannt, das ebenfalls in einem Brunnen verwendet wird. Die Klemme weist einen Verschluss auf, der im Bereich des Rohrs angeordnet ist.

Der Erfindung liegt die Aufgabe zugrunde, eine gattungsgemäße Klemme derart weiterzubilden, dass eine sichere Befestigung des länglichen Elements am Träger mittels der Klemme möglich ist.

Diese Aufgabe wird durch eine Klemme mit den Merkmalen des Anspruchs 1 gelöst.

Eine weitere Aufgabe der Erfindung liegt darin, ein gattungsgemäßes Arbeitsgerät derart weiterzubilden, dass das längliche Element des Arbeitsgeräts sicher am Träger des Arbeitsgeräts befestigt ist.

Diese Aufgabe wird durch ein Arbeitsgerät mit den Merkmalen des Anspruchs 15 gelöst.

Bei der erfindungsgemäßen Klemme ist vorgesehen, dass die Umfangswand sich in geschlossenem Zustand der Klemme vollständig umlaufend um den Aufnahmeraum erstreckt, und dass einer der beiden Wandabschnitte der Umfangswand zwei Teilabschnitte aufweist, deren Enden einen Verschluss zur lösbaren Verbindung der Teilwandabschnitte bilden. Durch den Verschluss kann die Klemme sicher verschlossen werden. Durch den Verschluss ist im geschlossenen Zustand der Klemme ein Aufspreizen der Teilwandabschnitte unterbunden. Die Auszugskräfte werden durch die Gestaltung und Positionierung des Verschlusses bestimmt und nicht allein durch die Federkraft der Teilwandabschnitte. Dadurch kann die Klemme auch bei Einwirkung hoher Auszugskräfte im geschlossenen Zustand bleiben. In einem geöffnetem Zustand der Klemme wirkt lediglich die Federkraft der Teilwandabschnitte und des die Teilwandabschnitte verbindenden Wandabschnitts einem Aufspreizen der Klemme entgegen. Dadurch, dass nicht nur die Federkraft die Auszugskraft in geschlossenem Zustand bestimmt, können die Wandabschnitte der Klemme elastischer gestaltet werden. Die Klemme lässt sich dadurch leichter aufspreizen und auf das längliche Element und den Träger aufsetzen. Dadurch, dass der einzige Aufnahmeraum von der einen Umfangswand begrenzt ist, lässt sich der eine Wandabschnitt als eine Art Gelenk für die entgegengesetzt zueinander bewegten Teilwandabschnitte des anderen Wandabschnitts nutzen. Dies kann ebenfalls zu einem leichteren Aufspreizen der Klemme führen.

Dadurch, dass die beiden Aufnahmebereiche einen einzigen Aufnahmebereich bilden, kann die Umfangswand vergleichsweise lang ausgebildet werden. Auch dadurch kann eine hohe Elastizität der Umfangswand erreicht werden, die es ermöglicht, dass die Klemme vorteilhaft so weit geöffnet werden kann, dass die Klemme in radialer Richtung zum Träger auf den Träger oder auch auf den Träger und das längliche Element aufgeschoben werden kann.

Gegenüber Klemmen, die einen dauerhaft geschlossenen ersten Aufnahmeraum für das Führungsrohr einer Motorsense und einen zweiten, separat davon ausgebildeten, spreizbaren Aufnahmeraum für einen Gaszug besitzen, hat die erfindungsgemäße Klemme den Vorteil, dass der Träger nicht durch den Aufnahmeraum gesteckt werden muss, um die Klemme an ihm zu befestigen. Eine Montage und Demontage der Klemme ist auch möglich, wenn weitere Gegenstände am Träger befestigt sind. Bei einem separat von dem ersten Aufnahmeraum ausgebildeten zweiten Aufnahmeraum sind die Abzugskräfte der Klemme von dem Führungsrohr durch die Federkraft der spreizbaren Schenkel des zweiten Aufnahmeraums limitiert. Dadurch, dass der erste und der zweite Aufnahmeraum erfindungsgemäß einen gemeinsamen Aufnahmeraum bilden, entfällt diese Limitierung bei einer Klemme nach der Erfindung.

Erfindungsgemäß weist das erste Ende des ersten Teilwandabschnitts eine Rippe auf. Das zweite Ende des zweiten Teilwandabschnitts weist eine Nut auf. Die Rippe greift im geschlossenen Zustand der Klemme so in die Nut ein, dass eine Bewegung des ersten Endes des ersten Teilwandabschnitts der Klemme gegenüber dem zweiten Ende des zweiten Teilwandabschnitts der Klemme in Richtung von der einen Stirnseite zu der anderen Stirnseite begrenzt ist. Dadurch kann eine Verdrillung der Klemme und ein ungewolltes Öffnen der Klemme im geschlossenen Zustand verhindert werden. Ebenfalls kann ein versehentliches Öffnen der Klemme durch Verschieben der Enden des Wandabschnitts in Richtung von der einen Stirnseite zu der anderen Stirnseite gegeneinander verhindert werden. Dadurch ist eine sichere Halterung des länglichen Elements am Träger mittels der Klemme möglich.

Vorteilhaft sind der erste Aufnahmebereich und der zweite Aufnahmebereich zwischen der Verbindungsstelle der Wandabschnitte über eine Engstelle des Aufnahmeraums miteinander verbunden. Dadurch kann die Form eines Aufnahmebereichs der Form des darin aufzunehmenden Trägers und/oder des darin aufzunehmenden länglichen Elements angepasst sein. Es ergeben sich definierte Positionen des Trägers und des länglichen Elements in der Klemme.

Die Klemme besitzt eine an der Engstelle des Aufnahmeraums in einer Ebene parallel zur Stirnseite zwischen den Verbindungsstellen der Wandabschnitte gemessene Breite.

Der zweite Aufnahmebereich besitzt einen parallel zur Breite gemessenen zweiten größten Durchmesser. Vorteilhaft ist der zweite größte Durchmesser des zweiten Aufnahmebereichs mindestens so groß wie die Breite zwischen den Verbindungsstellen der Wandabschnitte. Insbesondere ist der zweite größte Durchmesser des zweiten Aufnahmeraums größer als die Breite des Aufnahmeraums zwischen den Verbindungsstellen. Dadurch kann das längliche Element formschlüssig in der Klemme gehalten sein. Das längliche Element kann dadurch nicht verloren werden, wenn die Klemme von dem Träger gelöst wird. Die Montage der Klemme an dem Träger kann dadurch vereinfacht sein, da der Bediener das längliche Element während der Montage der Klemme an dem Träger nicht in der Klemme in Position halten muss.

Der erste Aufnahmebereich besitzt einen parallel zur Breite des Aufnahmeraums gemessenen ersten größten Durchmesser. In vorteilhafter Weiterbildung der Erfindung ist der erste größte Durchmesser des ersten Aufnahmebereichs größer als der zweite größte Durchmesser des zweiten Aufnahmebereichs. Dadurch kann der erste größte Durchmesser des ersten Aufnahmebereichs beispielsweise an den Durchmesser des Trägers angepasst sein, und der zweite größte Durchmesser des zweiten Aufnahmebereichs kann beispielsweise an den Durchmesser des länglichen Elements angepasst sein. Dadurch kann der erste Wandabschnitt des ersten Aufnahmebereichs beispielsweise am Träger anliegen. Ebenso kann dadurch der zweite Wandabschnitt des zweiten Aufnahmebereichs an einem länglichen Element anliegen. Dadurch ist eine sichere Halterung des Trägers und des länglichen Elements in der Klemme gewährleistet.

Zweckmäßig ist der Verschluss im Bereich des ersten Wandabschnitts angeordnet. Bei größerem Durchmesser des ersten Aufnahmebereichs ergibt sich eine größere Länge des ersten Wandabschnitts, was zu einer erhöhten Elastizität des ersten Wandabschnitts führt. Durch Anordnung des Verschlusses im Bereich des ersten Wandabschnitts kann der Verschluss so gestaltet werden, dass er sich leicht öffnen und schließen lässt.

Vorteilhaft ist die Klemme einteilig ausgebildet. Dadurch ist die Klemme einfach herzustellen und stabil. In alternativer Ausführung kann auch eine Anordnung im Bereich des zweiten Wandabschnitts vorgesehen sein.

Vorteilhaft ist die Klemme zumindest teilweise aus Kunststoff. Dadurch ist die Klemme auf einfache Weise herzustellen. Durch Ausbildung der Klemme aus Kunststoff lässt sich auf einfache Weise eine gewünschte Elastizität und Festigkeit der Klemme erzielen.

Zweckmäßig ist der Verschluss eine Schnappverbindung mit einem männlichen, hakenförmigen Element und einem weiblichen Element. Dadurch kann der Verschluss auf einfache Weise hergestellt werden. Separate Bauteile für die Herstellung des Verschlusses werden vorteilhaft nicht benötigt. Die Klemme kann insbesondere so gestaltet sein, dass die Schnappverbindung vom Bediener einfach und insbesondere mit einer Hand oder einem Schraubendreher geöffnet und geschlossen werden kann, so dass sich eine einfache Bedienung ergibt. Vorteilhaft wirken das männliche Element und das weibliche Element im geschlossenen Zustand zusammen. Dadurch ist die Klemme im geschlossenen Zustand sicher verschlossen. Dadurch können der Träger und das längliche Element sicher in der Klemme gehalten sein.

Vorteilhaft umfasst die Nut eine erste Nutwand und eine zweite Nutwand zur Aufnahme der Rippe dazwischen. Zweckmäßig sind die erste Nutwand und die zweite Nutwand in einer Ansicht in Richtung senkrecht zur Stirnseite überlappungsfrei zueinander angeordnet. Dadurch können die Nutwände in einem Gießverfahren, insbesondere einem Spritzgussverfahren, hinterschneidungsfrei hergestellt werden. Die so gegossene Klemme kann leicht entformt werden, ohne dass Gusskerne benötigt werden.

Vorteilhaft weist die Klemme im geschlossenen Zustand zwischen dem ersten Ende des ersten Teilwandabschnitts und dem zweiten Ende des zweiten Teilwandabschnitts einen Spalt auf. In vorteilhafter Weiterbildung der Erfindung weist die Klemme ein Abstützelement auf, das im geschlossenen Zustand den Spalt an zumindest einer Stelle in Umfangsrichtung der Umfangswand überbrückt. Dadurch kann der Verschluss der Klemme sicher verschlossen werden. Das Abstützelement kann eine Verdrillung der Klemme und ein ungewolltes Lösen des Verschlusses verhindern.

In vorteilhafter Weiterbildung der Erfindung weist die Klemme Mittel zur Änderung einer Länge der Klemme in Umfangsrichtung der Umfangswand auf. Dadurch kann die Klemme so gestaltet sein, dass sich der Verschluss der Klemme auf einfache Weise lösen und schließen lässt.

Zweckmäßig weist die Klemme am Innenumfang des ersten Aufnahmebereichs mindestens zwei Anlagebereiche zur Anlage am Träger auf. Die Klemme besitzt eine Mittelachse, die sich in Richtung von der einen Stirnseite zu der anderen Stirnseite erstreckt. Vorteilhaft weisen die Anlagebereiche zumindest im geschlossenen Zustand der Klemme einen ersten Abstand zur Mittelachse auf, der kleiner als ein zweiter Abstand eines Federabschnitts zur Mittelachse ist. Der Federabschnitt ist vorteilhaft am Innenumfang des ersten Aufnahmebereichs in Umfangsrichtung der Umfangswand zwischen den Anlagebereichen angeordnet. Dadurch lässt sich der Verschluss auf einfache Weise öffnen und verschließen. Hierzu kann der Federabschnitt in Richtung auf die Mittelachse zu bewegt werden. Hierbei vergrößert sich ein in Umfangsrichtung der Umfangswand gemessener Umschlingungswinkel der Klemme um die Umfangsrichtung herum. Dadurch können das männliche, hakenförmige Element und das weibliche Element voneinander entfernt werden und der Verschluss so geöffnet werden. Durch die Anordnung der Anlagebereiche und des Federabschnitts im ersten Aufnahmebereich kann der Federabschnitt eine große Länge in Umfangsrichtung aufweisen und auf diese Weise besonders elastisch sein. Dadurch ist ein komfortables Öffnen des Verschlusses der Klemme möglich.

Vorteilhaft sind die Anlagebereiche durch Erhebungen an der Umfangswand der Klemme ausgebildet. Zweckmäßig stehen die Erhebungen in Richtung vom Innenumfang des ersten Aufnahmebereichs auf die Mittelachse gegenüber der Umfangswand hervor. Dadurch können die Anlagebereiche auf einfache Weise hergestellt werden.

In vorteilhafter Weiterbildung der Erfindung weist die Klemme eine Fixierungsrippe zum Eingriff zwischen Rippen des länglichen Elements und zur Fixierung des länglichen Elements gegenüber einer Bewegung in Richtung von einer Stirnseite zur anderen Stirnseite auf. Zweckmäßig ist die Fixierungsrippe am Innenumfang des zweiten Aufnahmebereichs angeordnet und steht in Richtung vom Innenumfang des zweiten Aufnahmebereichs auf die Mittelachse der Klemme gegenüber dem Innenumfang hervor. Die Mittelachse der Klemme verläuft in Richtung von der ersten Stirnseite der Klemme zur zweiten Stirnseite der Klemme und ist im geschlossenen Zustand vollständig von der Umfangswand der Klemme umschlossen. Durch die Fixierungsrippe kann die Klemme gegenüber dem länglichen Element auf einfache Weise gegen Verschiebungen in Richtung der Mittelachse gesichert werden.

Das erfindungsgemäße Arbeitsgerät umfasst einen Träger und ein längliches Element. Die Erfindung sieht vor, dass das längliche Element mittels einer erfindungsgemäßen Klemme am Träger befestigt ist. Dadurch ist das längliche Element sicher am Träger gehalten.

Ausführungsbeispiele der Erfindung werden im Folgenden anhand der Zeichnung erläutert. Es zeigen:
- Fig. 1: eine schematische ausschnittsweise Ansicht eines Arbeitsgeräts,
- Fig. 2: eine schematische Seitenansicht des in Fig. 1 gezeigten Ausschnitts des Arbeitsgeräts aus Fig. 1,
- Fig. 3: eine perspektivische Darstellung eines Trägers und einer daran angeordneten Klemme im geöffneten Zustand,
- Fig. 4: eine perspektivische Darstellung eines länglichen Elements und des Trägers und der Klemme aus Fig. 3 in geschlossenem Zustand,
- Fig. 5: eine perspektivische Darstellung des länglichen Elements und der Klemme aus Fig. 3 in geöffnetem Zustand,
- Fig. 6: eine Seitenansicht auf die Klemme, den Träger und das längliche Element aus Fig. 4 in Richtung des Pfeils VI in Fig. 4,
- Fig. 7: eine Seitenansicht auf die Klemme aus Fig. 4 in Richtung des Pfeils VII in Fig. 4,
- Fig. 8 bis 10: perspektivische Darstellungen der Klemme aus Fig. 3 in geöffnetem Zustand,
- Fig. 11 und 12: perspektivische Darstellungen der Klemme aus Fig. 4 in geschlossenem Zustand,
- Fig. 13: eine vergrößerte Darstellung eines Details der Klemme aus Fig. 6,
- Fig. 14: einen Schnitt durch die Klemme aus Fig. 3 entlang der Schnittlinie XIV-XIV in Fig. 7,
- Fig. 15 und 16: perspektivische Darstellungen einer alternativen Ausführung einer Klemme in geöffnetem Zustand,
- Fig. 17: eine schematische Darstellung eines Trägers und einer alternativen Ausführung einer Klemme mit einem Mittel zur Änderung der Länge der Klemme in Umfangsrichtung einer Umfangswand der Klemme,
- Fig. 18 bis 20: schematische Seitenansichten in Richtung einer Längsmittelachse von verschiedenen Ausführungsformen von Klemmen mit Anlagebereichen und Federabschnitten.

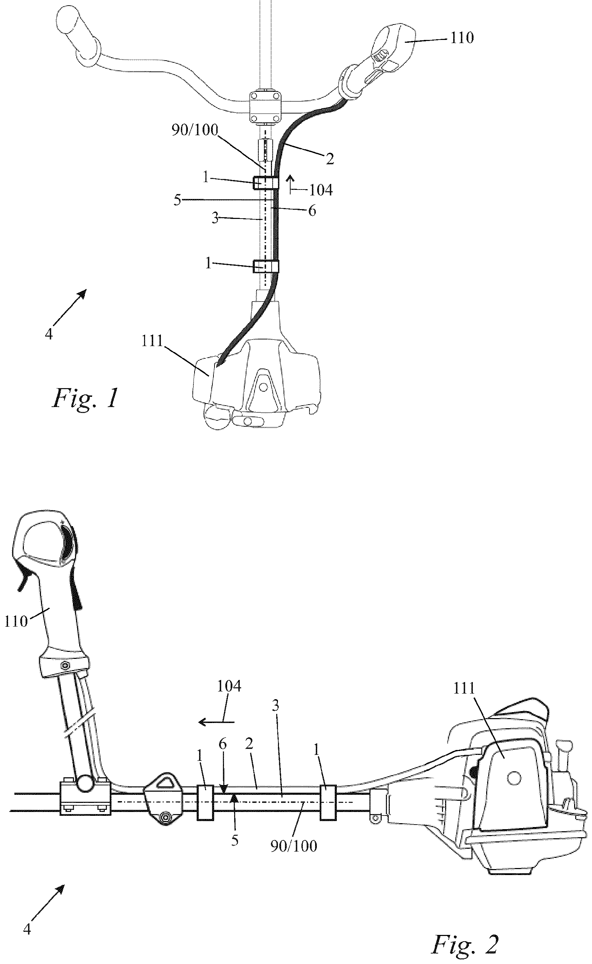

Die Figuren 1 und 2 zeigen in schematischen Darstellungen ein Arbeitsgerät 4 mit einem Träger 3, an dem mittels einer Klemme 1 ein längliches Element 2 befestigt ist. In den Ausführungsbeispielen ist das Arbeitsgerät 4 ein Freischneider, dessen Träger 3 als Führungsrohr zum Führen des Arbeitsgeräts ausgebildet ist. Das längliche Element 2 ist ein schlauchförmiges Element, in dem ein Gaszug geführt ist. Das längliche Element 2 verläuft zwischen einem Handgriff 110 des Arbeitsgeräts 4 und einem Motorgehäuse 111 des Arbeitsgeräts 4. Der Handgriff 110 und das Motorgehäuse 111 sind in einem Abstand zueinander am Träger 3 angeordnet. Zwischen dem Handgriff 110 und dem Motorgehäuse 111 ist das längliche Element 2 mittels zweier Klemmen 1 am Träger 3 des Arbeitsgeräts 4 befestigt. Das als schlauchförmiges Element ausgebildete längliche Element 2 ist entlang des als Führungsrohr ausgebildeten Trägers 3 geführt. Dies ermöglicht ein komfortables Arbeiten mit dem Arbeitsgerät 4, bei dem ein Verheddern im länglichen Element 2 verhindert ist. Auf diese Weise wird auch die Gefahr verringert, dass das längliche Element 2 beim Arbeiten mit dem Arbeitsgerät 4 beispielsweise an einem Ast hängen bleibt.

Die Klemme 1 kann auch bei anderen Arbeitsgeräten, wie beispielsweise einem Sprühgerät verwendet werden. Bei einem Sprühgerät kann das längliche Element ein Schlauch zum Führen von flüssigem oder pulverförmigem Sprühmittel und der Träger ein Blasrohr des Sprühgeräts sein. Ebenso kann mittels der Klemme 1 ein als Gaszug ausgebildetes längliches Element am als Blasrohr ausgebildeten Träger eines Blasgeräts befestigt werden.

Das längliche Element 2 besitzt eine Längsrichtung 104. Der Träger 3 besitzt eine Längsachse 90. Im Bereich der Klemme 1 verlaufen die Längsachse 90 des Trägers 3 und die Längsrichtung 104 des länglichen Elements 2 parallel. Das längliche Element 2 weist eine Längsseite 5 auf. Der Träger 3 weist eine Längsseite 6 auf. In der Klemme 1 sind das längliche Element 2 und der Träger 3 mit ihren Längsseiten 5, 6 nebeneinander angeordnet. Die Klemme 1 weist eine Mittelachse 100 auf. Bei Befestigung des länglichen Elements 2 am Träger 3 mittels der Klemme 1 verläuft die Mittelachse 100 parallel zur Längsachse 90 des Trägers 3 durch die Klemme 1.

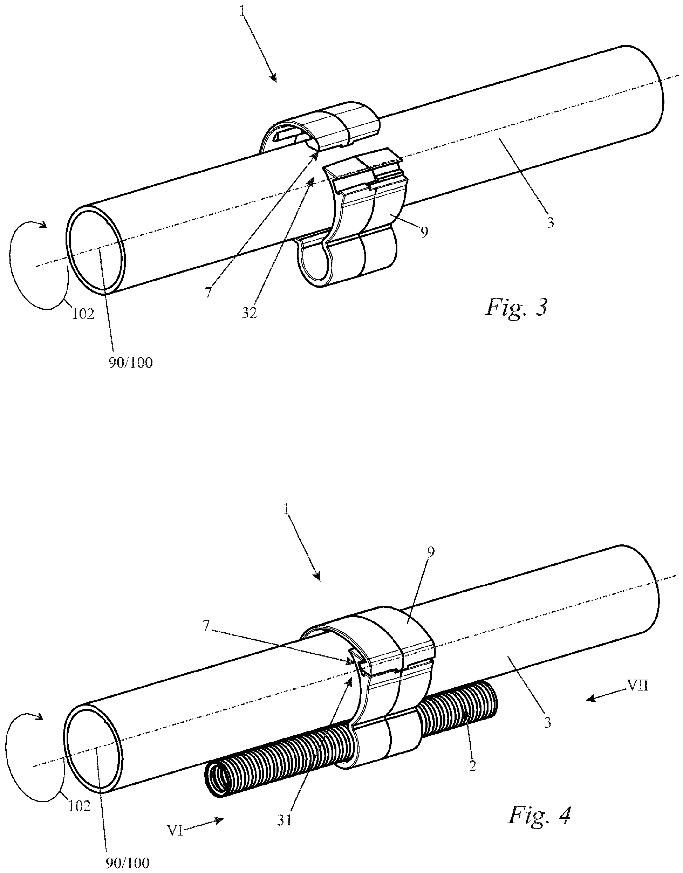

Fig. 3 zeigt den Träger 3 und die am Träger 3 angeordnete Klemme 1 in geöffnetem Zustand 32. Die Klemme 1 umgreift die Längsachse 90 des Trägers 3 zumindest teilweise. Die Klemme 1 weist einen Verschluss 7 auf. In dem in Fig. 3 gezeigten, geöffneten Zustand 32 ist der Verschluss 7 geöffnet. Die Klemme 1 weist eine Umfangswand 9 auf. Die Umfangswand 9 erstreckt sich in einer Umfangsrichtung 102 um den Träger 3. Die Umfangsrichtung 102 läuft um die Mittelachse 100 um. Im geöffneten Zustand 32 der Klemme 1 läuft die Umfangswand 9 nicht vollständig sondern lediglich teilweise in Umfangsrichtung 102 um die Mittelachse 100 um. Im geöffneten Zustand 32 weist die Umfangswand 9 in Umfangsrichtung 102 eine Unterbrechung auf. Durch diese Unterbrechung kann die Klemme 1 im geöffneten Zustand 32 vom Träger 3 in Richtung quer zu seiner Längsachse 90 abgezogen oder aufgesteckt werden. Dabei wird die Klemme 1 elastisch verformt und vorübergehend aufgeweitet.

Fig. 4 zeigt den Träger 3, das längliche Element 2 und die Klemme 1 in einem geschlossenen Zustand 31. Das längliche Element 2 ist mittels der Klemme 1 am Träger 3 befestigt. Im geschlossenen Zustand 31 der Klemme 1 ist der Verschluss 7 geschlossen. Im geschlossenen Zustand 31 läuft die Umfangswand 9 der Klemme 1 vollständig in Umfangsrichtung 102 um die Mittelachse 100 der Klemme 1 um. Im geschlossenen Zustand 31 umgreift die Klemme 1 die Mittelachse 100 der Klemme 1 vollständig und schließt die Mittelachse 100 über einen Umfangswinkel von 360° ein. Die Längsachse 90 des Trägers 3 und die Mittelachse 100 der Klemme 1 fallen in Fig. 4 zusammen.

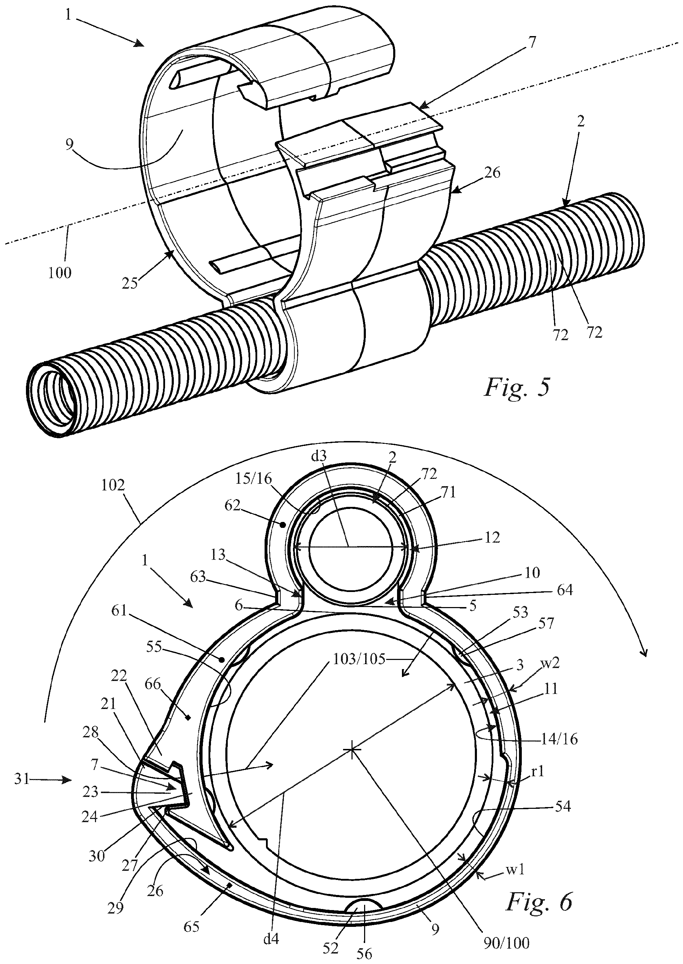

Wie in Fig. 5 dargestellt, weist die Klemme 1 eine erste Stirnseite 25 und eine zweite Stirnseite 26 auf. Die erste Stirnseite 25 und die zweite Stirnseite 26 erstrecken sich im Ausführungsbeispiel jeweils orthogonal zur Mittelachse 100 der Klemme 1. Auch ein anderer Verlauf der Stirnseiten kann jedoch vorteilhaft sein. Die Stirnseiten 25 und 26 begrenzen die Klemme 1 in Richtung der Mittelachse 100. Zwischen der ersten Stirnseite 25 und der zweiten Stirnseite 26 erstreckt sich die Umfangwand 9.

Fig. 6 zeigt eine Ansicht in Richtung der Mittelachse 100 auf die Anordnung aus Fig. 4. Die Klemme 1 befestigt das längliche Element 2 am Träger 3. Die Klemme 1 befindet sich im geschlossenen Zustand 31. Wenn das längliche Element 2 mittels der Klemme 1 am Träger 3 befestigt ist, verläuft die Mittelachse 100 der Klemme 1 parallel zur Längsachse 90 des Trägers 3 durch einen Aufnahmeraum 10 der Klemme 1. Die Mittelachse 100 fällt insbesondere mit der Längsachse 90 zusammen. Die Klemme 1 weist einen ersten Aufnahmebereich 11 für den Träger 3 auf. Die Klemme 1 weist einen zweiten Aufnahmebereich 12 für das längliche Element 2 auf. Der erste Aufnahmebereich 11 und der zweite Aufnahmebereich 12 bilden gemeinsam den einzigen Aufnahmeraum 10. Der erste Aufnahmebereich 11 ist durch einen ersten Wandabschnitt 61 der Umfangswand 9 begrenzt. Der zweite Aufnahmebereich 12 ist durch einen zweiten Wandabschnitt 62 der Umfangswand 9 begrenzt. Der erste Wandabschnitt 61 und der zweite Wandabschnitt 62 grenzen an zwei Verbindungsstellen 63, 64 aneinander an. Der erste Wandabschnitt 61 ist an den Verbindungsstellen 63 und 64 mit dem zweiten Wandabschnitt 62 verbunden. Der erste Aufnahmebereich 11 und der zweite Aufnahmebereich 12 sind im Bereich zwischen den Verbindungsstellen 63 und 64 zum einzigen Aufnahmeraum 10 miteinander verbunden. Im in Fig. 6 dargestellten geschlossenen Zustand 31 der Klemme 1 erstreckt sich die Umfangswand 9 vollständig umlaufend um den Aufnahmeraum 10.

Der erste Aufnahmebereich 11 weist einen Innenumfang 14 auf. Der zweite Aufnahmebereich 12 weist einen Innenumfang 15 auf. Der Innenumfang 14 des ersten Aufnahmebereichs 11 und der Innenumfang 15 des zweiten Aufnahmebereichs 12 bilden gemeinsam einen Innenumfang 16 des einzigen Aufnahmeraums 10. Die Form des Innenumfangs 14 des ersten Aufnahmebereichs 11 ist zur Anlage am Träger 3 im Ausführungsbeispiel im Wesentlichen konkav ausgebildet. Die Form des Innenumfangs 15 des zweiten Aufnahmebereichs 12 ist zur Anlage an dem länglichen Element 2 konkav ausgebildet. Auch andere Formen des Innenumfangs des ersten Aufnahmebereichs und des Innenumfangs des zweiten Aufnahmebereichs können vorteilhaft sein.

Einer der beiden Wandabschnitte 61 und 62 weist zwei Teilwandabschnitte 65 und 66 auf. In den Ausführungsbeispielen weist der erste Wandabschnitt 61 den ersten Teilwandabschnitt 65 und den zweiten Teilwandabschnitt 66 auf. Der erste Teilwandabschnitt 65 besitzt ein erstes Ende 21. Der Teilwandabschnitt 66 besitzt ein zweites Ende 22. Die Enden 21 und 22 sind gleichzeitig Enden der Umfangswand 9. Die Enden 21 und 22 bilden den Verschluss 7 zur lösbaren Verbindung der Teilwandabschnitte 65 und 66. In den Ausführungsbeispielen ist der Verschluss 7 im Bereich des ersten Wandabschnitts 61 angeordnet. Die Klemme 1 weist lediglich einen einzigen Verschluss 7 auf. Im geschlossenen Zustand 31 umschließt die mittels des Verschlusses 7 geschlossene Klemme 1 die Mittelachse 100 unterbrechungsfrei. Durch Öffnen des Verschlusses 7 kann die Klemme 1 in den in den Figuren 3 und 5 dargestellten geöffneten Zustand gebracht werden.

Wie in Fig. 6 dargestellt, ist der Verschluss 7 eine Schnappverbindung. Der Verschluss 7 umfasst ein männliches, hakenförmiges Element 23 und ein weibliches Element 24. Im geschlossenen Zustand 31 der Klemme 1 wirken das männliche Element 23 und das weibliche Element 24 zusammen. Das männliche Element 23 ist im geschlossenen Zustand 31 in das weibliche Element 24 eingehakt. Der Verschluss 7 verbindet im geschlossenen Zustand 31 der Klemme 1 den ersten Teilwandabschnitt 65 und den zweiten Teilwandabschnitt 66 formschlüssig miteinander. Das weibliche Element 24 weist eine Vertiefung 28 auf. Die Vertiefung 28 ist gegenüber einem Vorsprung 27 des weiblichen Elements 24 in Richtung 105 vom Innenumfang 14 des ersten Aufnahmebereichs 11 auf die Mittelachse 100 der Klemme 1 hin vertieft. Der Vorsprung 27 begrenzt die Vertiefung 28 in Richtung entgegen der Umfangsrichtung 102. Die Umfangsrichtung 102 läuft ausgehend vom zweiten Ende 22 des ersten Wandabschnitts 61 in Richtung weg vom ersten Ende 21 des ersten Wandabschnitts 61 hin zum zweiten Wandabschnitt 62 um die Mittelachse 100 um. Der Vorsprung 27 hält das männliche Element 23 und verhindert eine Bewegung des ersten Endes 21 in Richtung auf die geöffnete Stellung des ersten Endes 21 des ersten Wandabschnitts 61, die das erste Ende 21 in dem geöffneten Zustand 32 der Klemme 1 einnimmt.

Der erste Wandabschnitt 61 weist eine Innenseite 29 auf. Die Innenseite 29 ist der Mittelachse 100 zugewandt. Im Bereich des ersten Endes 21 springt das hakenförmige Element 23 gegenüber der Innenseite 29 des ersten Wandabschnitts 61 in Richtung 105 vom Innenumfang 14 des ersten Aufnahmebereichs 11 im Bereich des hakenförmigen Elements 23 in Richtung auf die Mittelachse 100 vor. Die Form des männlichen, hakenförmigen Elements 23 korrespondiert mit der Form der Vertiefung 28 und der Form des Vorsprungs 27 des weiblichen Elements 24. Entgegen der Umlaufrichtung 102 ist das hakenförmige Element 23 durch eine Flanke 30 begrenzt. Im geschlossenen Zustand 31 der Klemme 1 liegt die Flanke 30 des hakenförmigen Elements 23 am Vorsprung 27 in der Vertiefung 28 des weiblichen Elements 24 an. Im geschlossenen Zustand 31 der Klemme 1 drückt die Flanke 30 des hakenförmigen Elements 23 gegen den Vorsprung 27 des weiblichen Elements 24.

Die Klemme 1 ist einteilig ausgebildet. Der zweite Teilwandabschnitt 66 des ersten Wandabschnitts 61 ist an der ersten Verbindungsstelle 63 mit dem zweiten Wandabschnitt 62 verbunden. Der zweite Wandabschnitt 62 ist an der zweiten Verbindungsstelle 64 mit dem ersten Teilwandabschnitt 65 des ersten Wandabschnitts 61 verbunden. Im geschlossenen Zustand 31 ist der erste Teilwandabschnitt 65 des ersten Wandabschnitts 61 über den Verschluss 7 mit dem zweiten Teilwandabschnitt 66 des ersten Wandabschnitts 61 verbunden.

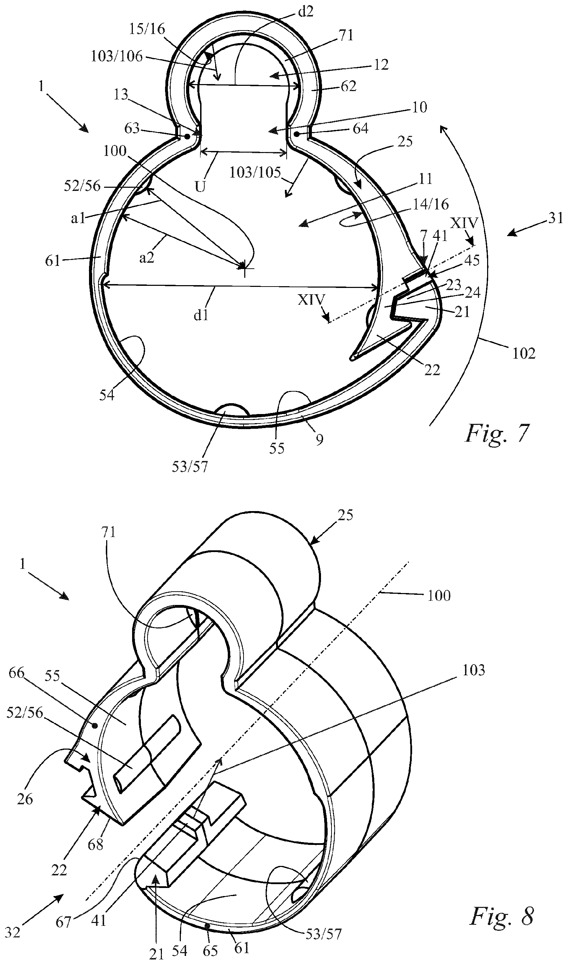

Fig. 7 zeigt die Klemme 1 in geschlossenem Zustand 31 ohne ein in der Klemme 1 angeordnetes längliches Element und ohne einen Träger. Der erste Aufnahmebereich 11 und der zweite Aufnahmebereich 12 sind zwischen der ersten Verbindungsstelle 63 und der zweiten Verbindungsstelle 64 über eine Engstelle 13 des einzigen Aufnahmeraums 10 miteinander verbunden. Die Klemme 1 besitzt eine an der Engstelle 13 des Aufnahmeraums 10 in einer Ebene parallel zur Stirnseite 25 zwischen der ersten Verbindungsstelle 63 und der zweiten Verbindungsstelle 64 gemessene Breite U. Der zweite Aufnahmebereich 12 besitzt einen parallel zur Breite U gemessenen zweiten größten Durchmesser d2. Der zweite größte Durchmesser d2 ist mindestens so groß wie die Breite U. Es kann vorgesehen sein, dass der zweite größte Durchmesser genauso groß ist wie die Breite des Aufnahmeraums an der Engstelle. In den Ausführungsbeispielen ist der zweite größte Durchmesser d2 größer als die Breite U. Vorteilhaft ist die Breite U kleiner als ein in Fig. 6 dargestellter Außendurchmesser d3 eines in der Klemme 1 anzuordnenden länglichen Elements 2. Dadurch kann das längliche Element 2 in den zweiten Aufnahmebereich 12 eingeklipst werden und ist in dem zweiten Aufnahmebereich 12 in seiner Lage fixiert.

Wie in Fig. 7 dargestellt, besitzt der erste Aufnahmebereich 11 einen parallel zur Breite U des Aufnahmeraums 10 an der Engstelle 13 gemessenen ersten größten Durchmesser d1. Der erste größte Durchmesser d1 des ersten Aufnahmebereichs 11 ist größer als der zweite größte Durchmesser d2 des zweiten Aufnahmebereichs 12. Es kann auch vorgesehen sein, dass der zweite größte Durchmesser des zweiten Aufnahmebereichs größer als der erste größte Durchmesser des ersten Aufnahmebereichs ist. Der erste Aufnahmebereich 11 ist zur Aufnahme des Trägers 3 vorgesehen. Der zweite Aufnahmebereich 12 ist zur Aufnahme des länglichen Elements 2 vorgesehen. Der zweite größte Durchmesser d2 des zweiten Aufnahmebereichs 12 ist mindestens so groß, vorteilhaft größer als der in Fig. 6 dargestellte Außendurchmesser d4 des Trägers 3.

Wie in Fig. 7 dargestellt, weist die Klemme 1 eine Fixierungsrippe 71 auf. Die Fixierungsrippe 71 ist zum Eingriff zwischen in Fig. 5 dargestellten benachbarten Rippen 72 des länglichen Elements 2 vorgesehen. Wenn das längliche Element 2 in die Klemme 1 geklemmt ist, sind die Rippen 72 im Bereich der Klemme 1 in Richtung der Mittelachse 100 nebeneinander angeordnet. Die Rippen 72 stehen in Radialrichtung des länglichen Elements 2, also senkrecht zur Mittelachse 100, hervor. Die Fixierungsrippe 71 ist so ausgebildet, dass sie derart zwischen die Rippen 72 des länglichen Elements 2 eingreift, dass das längliche Element 2 gegenüber einer Bewegung in Richtung von einer Stirnseite 25, 26 zur anderen Stirnseite 25, 26 fixiert ist. Die Fixierungsrippe 71 ist am Innenumfang 15 des zweiten Aufnahmebereichs 12 angeordnet, wie in Fig. 7 dargestellt. Die Fixierungsrippe 71 steht gegenüber dem Innenumfang 15 in Richtung 103 vom Innenumfang 15 auf die Mittelachse 100 der Klemme 1 hervor. Die Mittelachse 100 verläuft senkrecht zu den Stirnseiten 25 und 26 der Klemme 1. Wie in Fig. 8 dargestellt, ist die Fixierungsrippe 71 in Richtung der Mittelachse 100 in der Mitte der Klemme 1 zwischen der ersten Stirnseite 25 und der zweiten Stirnseite 26 angeordnet.

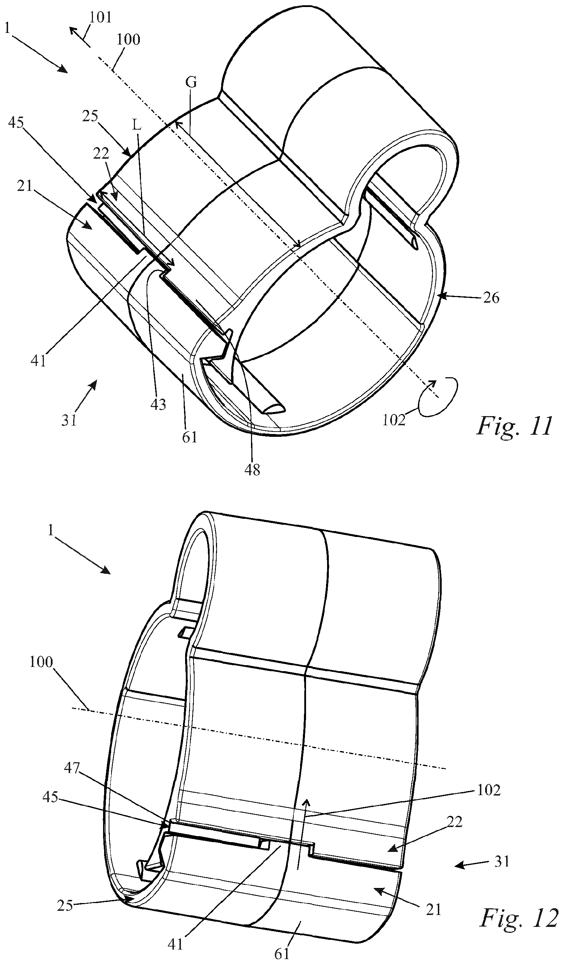

Die Figuren 8 bis 12 zeigen verschiedene perspektivische Ansichten der Klemme 1 in geöffnetem Zustand 32 und in geschlossenem Zustand 31. Das erste Ende 21 des ersten Wandabschnitts 61 weist eine Rippe 41 auf. Das zweite Ende 22 des ersten Wandabschnitts 61 weist eine Nut 42 auf. Die Rippe 41 und die Nut 42 erstrecken sich in Umfangsrichtung 102 und zumindest mit einem vektoriellen Anteil in radialer Richtung 103 zur Mittelachse 100. Im in den Figuren 11 und 12 dargestellten geschlossenen Zustand 31 der Klemme 1 greift die Rippe 41 nach dem Nut-Feder-Prinzip in die Nut 42 ein. Die Rippe 41 kann auch als Feder bezeichnet werden. Die Rippe 41 greift in geschlossenem Zustand 31 der Klemme 1 so in die Nut 42 ein, dass eine Bewegung des ersten Endes 21 des ersten Wandabschnitts 61 der Klemme 1 gegenüber dem zweiten Ende 22 des ersten Wandabschnitts 61 der Klemme 1 in Richtung von der einen Stirnseite 25, 26 zu der anderen Stirnseite 25, 26 begrenzt ist.

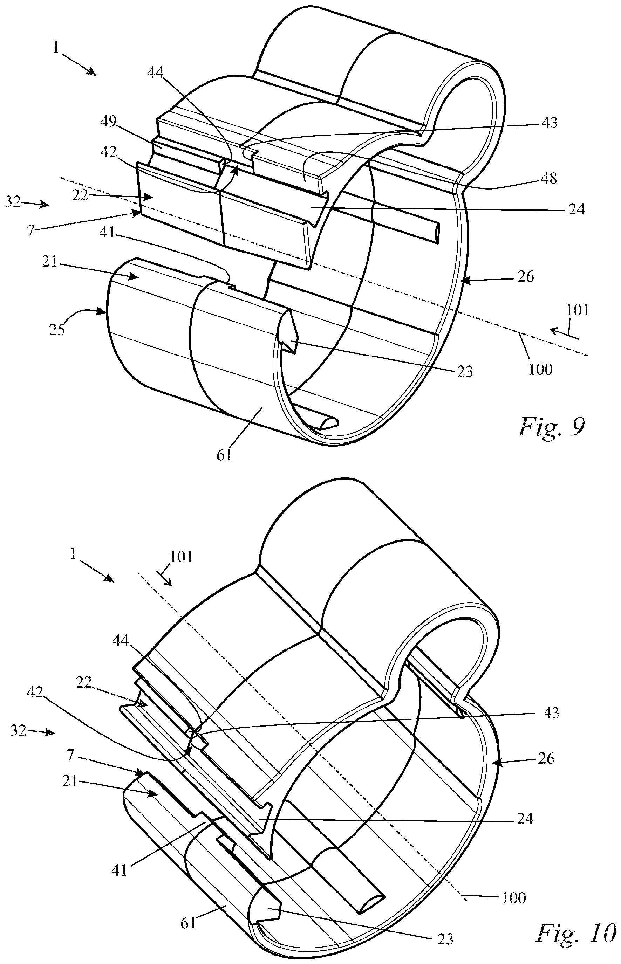

Wie in den Figuren 9 und 10 dargestellt, weist die Nut 42 eine erste Nutwand 43 und eine zweite Nutwand 44 zur Aufnahme der Rippe 41 dazwischen auf. Die erste Nutwand 43 ist Teil eines ersten Stegs 48. Die zweite Nutwand 44 ist Teil eines zweiten Stegs 49. Die Nutwände 43 und 44 verlaufen quer, insbesondere senkrecht zur Mittelachse 100. Der erste Steg 48 und damit auch die erste Nutwand 43 sind der zweiten Stirnseite 26 zugeordnet. Der zweite Steg 49 und damit auch die zweite Nutwand 44 sind der ersten Stirnseite 25 zugeordnet. Der erste Steg 48 und der zweite Steg 49 erstrecken sich in Richtung der Mittelachse 100. Der erste Steg 48 und der zweite Steg 49 sind in Richtung der Mittelachse 100 zueinander beabstandet. Die Mittelachse 100 erstreckt sich in einer Achsrichtung 101. Die Achsrichtung 101 verläuft parallel zur Mittelachse 100 in Richtung von der zweiten Stirnseite 26 hin zur ersten Stirnseite 25, wie in Fig. 9 eingezeichnet.

Wie in den Figuren 11 und 12 dargestellt, weist die Klemme 1 in geschlossenem Zustand 31 zwischen dem ersten Ende 21 und dem zweiten Ende 22 einen Spalt 45 auf. Der Spalt 45 erstreckt sich, wie in Fig. 11 dargestellt, in Achsrichtung 101 von der ersten Nutwand 43 bis zur ersten Stirnseite 25. In Ansicht der Klemme 1 in Achsrichtung 101 verdeckt der erste Steg 48 den Spalt 45. Im geschlossenen Zustand 31 der Klemme 1 stellt der Spalt 45 eine Vertiefung im Außenumfang der Klemme 1 dar. Der Spalt 45 weist eine in Achsrichtung 101 gemessene Länge L auf. Die Länge L des Spalts 45 beträgt im Ausführungsbeispiel mehr als 50% einer in Achsrichtung 101 gemessenen Gesamtlänge G der Klemme 1. Es kann auch vorgesehen sein, dass die Länge des Spalts weniger als 50% beträgt. Insbesondere kann vorgesehen sein, dass die Länge des Spalts 0% der Gesamtlänge beträgt.

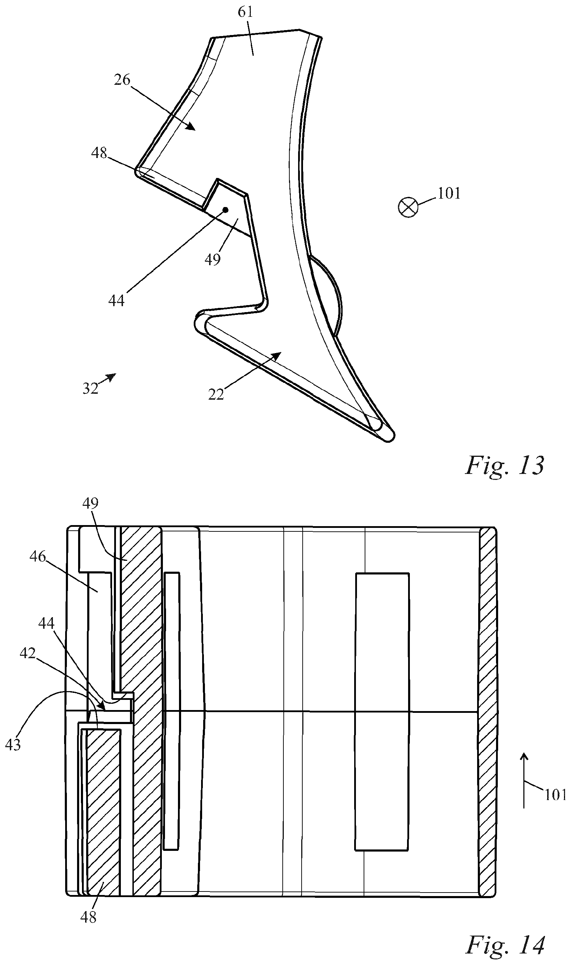

Fig. 13 zeigt einen Blick in Achsrichtung 101 senkrecht auf die zweite Stirnseite 26 auf das zweite Ende 22 des ersten Wandabschnitts 61 in geöffnetem Zustand 32 der Klemme 1. In dieser in Fig. 13 dargestellten Ansicht ist die erste Nutwand 43 nicht sichtbar. Die erste Nutwand 43 ist an dem der zweiten Stirnseite 46 abgewandt liegenden Ende des ersten Stegs 48 angeordnet. Die erste Nutwand 43 und die zweite Nutwand 44 sind in einer Ansicht in Richtung senkrecht zur zweiten Stirnseite 26, also in Achsrichtung 101, überlappungsfrei zueinander angeordnet.

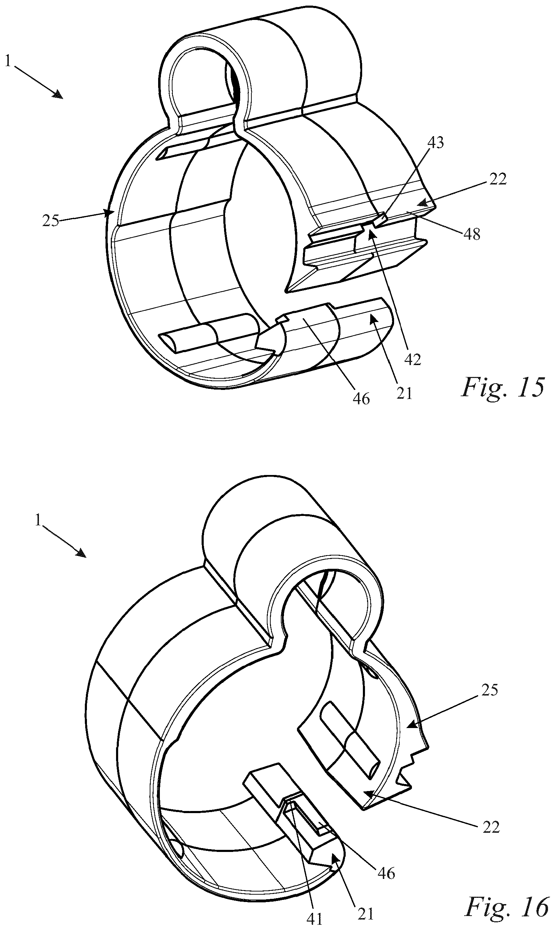

Dies ergibt sich auch aus der in Fig. 14 gezeigten Schnittdarstellung. Fig. 14 zeigt einen Schnitt durch eine in den Figuren 15 und 16 dargestellte alternative Ausführungsform der Klemme 1. Die Ausführungsform nach den Figuren 15 und 16 weist ein Abstützelement 46 auf. In den Darstellungen nach den Figuren 3 bis 12 weist die Klemme 1 kein solches Abstützelement auf. Die Position der Schnittebene des Schnitts durch die Klemme 1 gemäß der Ausführungsvariante nach den Figuren 15 und 16 ist in Fig. 7 bei einer Klemme 1 ohne Abstützelement eingezeichnet. In Fig. 14 ist deutlich zu erkennen, dass die erste Nutwand 43 und die zweite Nutwand 44 in Ansicht in Achsrichtung 101 überlappungsfrei zueinander angeordnet sind. In Ansicht in Achsrichtung 101 sind auch der erste Steg 48 und der zweite Steg 49 überlappungsfrei zueinander angeordnet. In geschlossenem Zustand 31 der Klemme liegt die Rippe 41 in Achsrichtung 101 zwischen der ersten Nutwand 43 und der zweiten Nutwand 44. Die Rippe 41 und die Nut 42 erstrecken sich in einer Ebene senkrecht zur Achsrichtung 101. Im geschlossenen Zustand 31 der Klemme 1 begrenzen die erste Nutwand 43 und die zweite Nutwand 44 eine Relativbewegung zwischen dem ersten Ende 21 des ersten Wandabschnitts 61 und dem zweiten Ende 22 des ersten Wandabschnitts 61 in Richtung senkrecht zu den Stirnseiten 25 und 26.

Die Klemme 1 ist zumindest teilweise aus Kunststoff. Durch die überlappungsfreie Anordnung der Nutwände 43 und 44 in Ansicht in Achsrichtung 101 ist eine einfache Entformung der zumindest teilweise aus Kunststoff in einem Spritzgussverfahren hergestellten Klemme 1 möglich.

Die Figuren 15 und 16 zeigen eine alternative Ausführungsform der Klemme 1, die zusätzlich das Abstützelement 46 umfasst. Aus den Figuren 11, 15 und 16 ergibt sich, dass das Abstützelement 46 im geschlossenen Zustand 31 den zum ersten Ausführungsbeispiel in den Fig. 11 und 12 gezeigten Spalt 45 an zumindest einer Stelle in Umfangsrichtung 102 der Umfangswand 9 überbrückt. Es kann vorgesehen sein, dass das Abstützelement den Spalt im geschlossenen Zustand der Klemme vollständig ausfüllt. Im Ausführungsbeispiel nach den Figuren 15 und 16 überbrückt das Abstützelement 46 den Spalt 45 im geschlossenen Zustand 31 der Klemme 1 zumindest über 70% der Längenausdehnung des Spalts 45. Vorteilhaft ist die Rippe 41 an dem Abstützelement 46 angeordnet, wie insbesondere Fig. 16 zeigt.

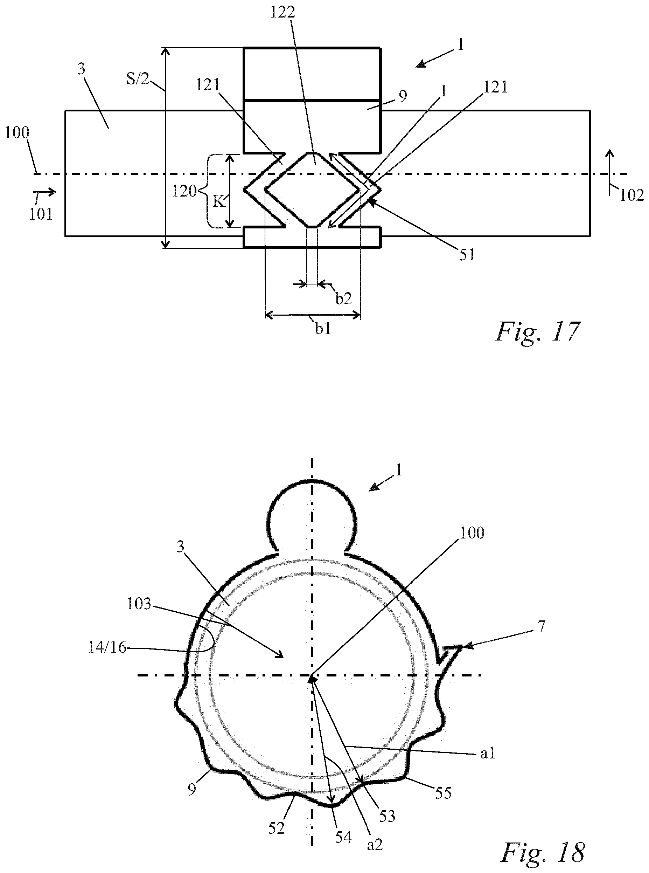

Fig. 17 zeigt eine weitere Ausführungsvariante der Klemme 1. Die Klemme 1 nach Fig. 17 weist Mittel 51 zur Änderung einer absoluten, entlang des Verlaufs der Klemme 1 in einer Ebene senkrecht zur Mittelachse 100 gemessenen Länge S der Klemme 1 auf. Die Länge S stellt ein Wegintegral des Verlaufs einer Projektion der Klemme 1 in Achsrichtung 101 auf die Ebene senkrecht zur Mittelachse 100 dar. Die Klemme 1 ist elastisch verformbar. Die Umfangswand 9 weist einen Umfangsabschnitt 120 auf. Im Umfangsabschnitt 120 besteht die Umfangswand 9 aus zwei Stegen 121. Die Länge I eines Stegs 121 entlang seines Verlaufs ist länger als die in Umfangsrichtung 102 gemessene Länge K des Umfangsabschnitts 120. Die Länge I stellt ein Wegintegral entlang des Verlaufs des Stegs 121 dar. Die beiden Stege 121 begrenzen eine durchgehende Öffnung 122 in der Umfangswand 9. In der Mitte des Umfangsabschnitts 120 bezüglich der Umfangsrichtung 102 weist die Öffnung 122 eine in Achsrichtung 101 gemessene Breite b1 auf. In Umfangsrichtung näher zum Rand des Umfangsabschnitts 120 weist die Öffnung 122 eine in Achsrichtung 101 gemessene Breite b2 auf. Die Breite b1 in der Mitte des Umfangsabschnitts 120 ist größer als die Breite b2 am Rand des Umfangsabschnitts 120. Die integrierte Länge S der Klemme 1 entlang ihres Verlaufs senkrecht zur Mittelachse 100 lässt sich durch Zusammendrücken der Stege 121 in Richtung der Mittelachse 100 vergrößern. Hierbei verkleinert sich die Breite b1 der Öffnung 122 in der Mitte des Umfangsabschnitts 120. Die Länge K des Umfangsabschnitts 120 in Umfangsrichtung 102 vergrößert sich ebenfalls. Durch das Mittel 51 zur Änderung der Länge S der Klemme 1 in Umfangsrichtung 102 kann das in Fig. 6 dargestellte männliche, hakenförmige Element 23 auf einfache Weise aus dem weiblichen Element 24 gelöst werden. Durch die Vergrößerung der Länge S der Klemme 1 in Umfangsrichtung 102 kann die Flanke 30 des hakenförmigen Elements 23 vom Vorsprung 27 des weiblichen Elements 24 auf einfache Weise in Umfangsrichtung 102 entfernt werden. Dann wird die Flanke 30 nicht mehr gegen den Vorsprung 27 gedrückt, und das hakenförmige Element 23 kann aus dem weiblichen Element 24 gelöst werden.

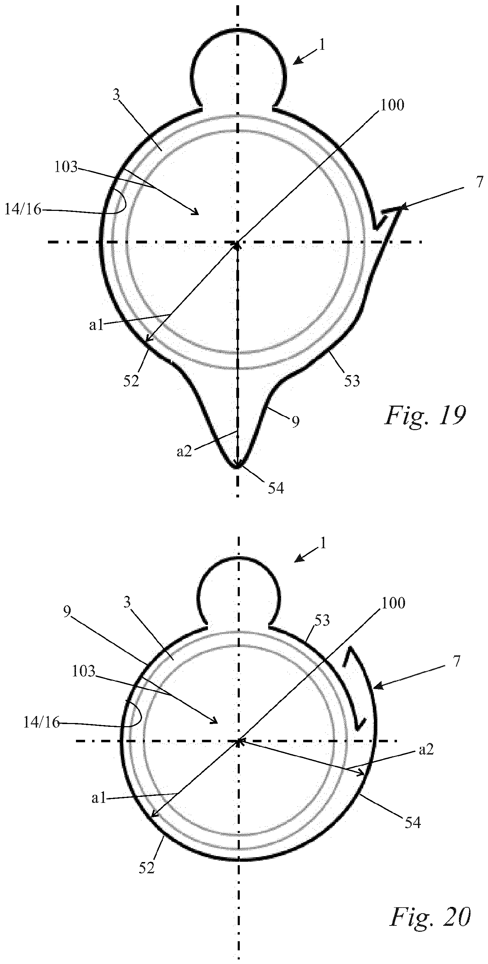

Die Figuren 18 bis 20 zeigen weitere verschiedene Ausführungsformen der Klemme 1 mit verschiedenen Mechanismen zum Lösen des Verschlusses 7 der Klemme 1. Die Klemme 1 ist zum Lösen des Verschlusses 7 elastisch verformbar. Die Klemme 1 weist am Innenumfang 14 des ersten Aufnahmebereichs 11 mindestens zwei Anlagebereiche 52, 53 zur Anlage am Träger 3 auf. In Umfangsrichtung 102 der Umfangswand 9 zwischen den Anlagebereichen 52 und 53 ist zumindest ein Federabschnitt 54 angeordnet. Im Ausführungsbeispiel nach Fig. 18 ist zwischen zwei benachbarten Anlagebereichen 52 und 53 jeweils ein Federabschnitt 54, 55 vorgesehen. Nach Fig. 18 sind mehrere Anlagebereiche 52, 53 vorgesehen. Die Anlagebereiche 52 und 53 weisen zumindest im geschlossenen Zustand 31 der Klemme 1 einen ersten Abstand a1 zur Mittelachse 100 auf. Der Federabschnitt 54, 55 weist zumindest im geschlossenen Zustand 31 der Klemme 1 einen zweiten Abstand a2 zur Mittelachse 100 auf. Der erste Abstand a1 der Anlagebereiche 52 und 53 zur Mittelachse 100 ist kleiner als der zweite Abstand a2 des Federabschnitts 54, 55 zur Mittelachse 100.

Die Klemme 1 gemäß den Ausführungsformen nach den Figuren 3 bis 16 und 18 bis 20 umschlingt den Träger 3 im geschlossenen Zustand 31 der Klemme 1 entlang eines ersten Umschlingungswinkels. Der erste Umschlingungswinkel ist größer als 360°. Die elastische Umfangswand 9 der Klemme 1 kann im Bereich des Federabschnitts 54, 55 (Figuren 6, 7, 18, 19 und 20) im geschlossenen Zustand 31 der Klemme 1 in Richtung auf die Mittelachse 100 eingedrückt werden. Dadurch vergrößert sich der Umschlingungswinkel. Die Länge der Klemme 1 entlang ihres Verlaufs in einer Ebene senkrecht zur Mittelachse 100 bleibt konstant. Im eingedrücktem Zustand der Umfangswand 9 umschlingt die Klemme 1 den Träger 3 entlang eines zweiten Umschlingungswinkels. Der zweite Umschlingungswinkel ist größer als der erste Umschlingungswinkel. Dadurch, dass der zweite Umschlingungswinkel größer als der erste Umschlingungswinkel ist, kann der Verschluss 7 durch Eindrücken des Federabschnitts 54, 55 geöffnet werden. Beim Eindrücken des Federabschnitts 54, 55 wird in analoger Weise zum Ausführungsbeispiel nach Fig. 17 das in Fig. 6 dargestellte männliche hakenförmige Element 23 aus dem weiblichen Element 24 entfernt und der Verschluss 7 so geöffnet.

Im Ausführungsbeispiel nach Fig. 6 sind die Anlagebereiche 52 und 53 durch Erhebungen 56 und 57 an der Umfangswand 9 der Klemme 1 ausgebildet. Die Erhebungen 56 und 57 stehen in Richtung 105 vom Innenumfang 14 des ersten Aufnahmebereichs 11 auf die Mittelache 100 gegenüber der Umfangswand 6 hervor. Im geschlossenen Zustand 31 der Klemme 1 liegen die Erhebungen 56 und 57 am Träger 3 an. In Umfangsrichtung 102 ist zwischen der Erhebung 56 und der Erhebung 57 der Federabschnitt 54 angeordnet. Wie bereits zu den Ausführungsbeispielen nach den Figuren 18 bis 20 beschrieben, weist der Federabschnitt 54 in geschlossenem Zustand 31 der Klemme 1 zur Mittelachse 100 einen größeren Abstand a2 auf als die Erhebungen 56 und 57.

Der erste Wandabschnitt 61 weist zumindest einen Teilwandabschnitt 65 mit zumindest abschnittsweise reduzierter Wandstärke w1 auf. Im Bereich des Teilwandabschnitts 65 mit reduzierter Wandstärke w1 besitzt der erste Wandabschnitt 61 einen größeren radialen Abstand r1 zum Träger 3 als in Bereichen unreduzierter Wandstärke w2. Aufgrund der reduzierten Wandstärke w1 und des größeren radialen Abstandes rl zum Träger 3 lässt sich der Teilwandabschnitt 65 mit reduzierter Wandstärke w1 in Richtung 103 radial nach innen drücken, wodurch sich der Verschluss 7 aushängen lässt.

Durch die reduzierte Wandstärke des Teilwandabschnitts 65 lässt sich dieser auch ausreichend vom anderen Teilwandabschnitt 66 wegspreizen, so dass der Träger 3 radial eingeschoben werden kann. Um das Einschieben des Trägers 3 zu erleichtern, sind in Fig. 8 dargestellte Einführschrägen 67 und 68 an den Teilwandabschnitten 65 und 66 vorgesehen. Die Einführschrägen 67 und 68 bewirken beim Aufschieben der Klemme 1 auf den Träger 3 in Richtung senkrecht zur Mittelachse 100 bei Kontakt mit dem Träger 3 ein weiteres Aufspreizen der Klemme 1.

## Patentansprüche

1. Klemme zur Befestigung eines länglichen Elements (2) an einem Träger (3) , insbesondere dem Träger (3) eines Arbeitsgeräts (4), wobei die Klemme (1) einen ersten Aufnahmebereich (11) für den Träger (3) und einen zweiten Aufnahmebereich (12) für das längliche Element (2) aufweist, wobei die Klemme (1) eine erste Stirnseite (25) und eine zweite Stirnseite (26) aufweist, zwischen denen sich eine Umfangswand (9) erstreckt, wobei der erste Aufnahmebereich (11) durch einen ersten Wandabschnitt (61) der Umfangswand (9) begrenzt ist, wobei der zweite Aufnahmebereich (12) durch einen zweiten Wandabschnitt (62) der Umfangswand (9) begrenzt ist, wobei der erste Wandabschnitt (61) und der zweite Wandabschnitt (62) an zwei Verbindungsstellen (63, 64) aneinander grenzen, wobei der erste Aufnahmebereich (11) und der zweite Aufnahmebereich (12) zwischen den Verbindungsstellen (63, 64) miteinander verbunden sind und gemeinsam einen einzigen Aufnahmeraum (10) bilden, wobei die Umfangswand (9) sich in geschlossenem Zustand (31) der Klemme (1) vollständig umlaufend um den Aufnahmeraum (10) erstreckt, und wobei einer der Wandabschnitte (61, 62) zwei Teilwandabschnitte (65, 66) aufweist, deren Enden (21, 22) einen Verschluss (7) zur lösbaren Verbindung der Teilwandabschnitte (65, 66) bilden,
**dadurch gekennzeichnet, dass** das erste Ende (21) des ersten Teilwandabschnitts (65) eine Rippe (41) aufweist, dass das zweite Ende (22) des zweiten Teilwandabschnitts (66) eine Nut (42) aufweist, und dass im geschlossenen Zustand (31) der Klemme (1) die Rippe (41) so in die Nut (42) eingreift, dass eine Bewegung des ersten Endes (21) des ersten Teilwandabschnitts (65) der Klemme (1) gegenüber dem zweiten Ende (22) des zweiten Teilwandabschnitts (66) der Klemme (1) in Richtung von der einen Stirnseite (25, 26) zu der anderen Stirnseite (25, 26) begrenzt ist.

2. Klemme nach Anspruch 1,
**dadurch gekennzeichnet, dass** der erste Aufnahmebereich (11) und der zweite Aufnahmebereich (12) zwischen den Verbindungsstellen (63, 64) der Wandabschnitte (61, 62) über eine Engstelle (13) des Aufnahmeraums (10) miteinander verbunden sind.

3. Klemme nach Anspruch 2,
**dadurch gekennzeichnet, dass** die Klemme (1) eine an der Engstelle (13) des Aufnahmeraums (10) in einer Ebene parallel zur Stirnseite (25, 26) zwischen den Verbindungsstellen (63, 64) der Wandabschnitte (61, 62) gemessene Breite (U) besitzt, dass der zweite Aufnahmebereich (12) einen parallel zur Breite (U) gemessenen zweiten größten Durchmesser (d2) besitzt, und dass der zweite größte Durchmesser (d2) mindestens so groß ist wie die Breite (U).

4. Klemme nach Anspruch 3,
**dadurch gekennzeichnet, dass** der erste Aufnahmebereich (11) einen parallel zur Breite (U) gemessenen ersten größten Durchmesser (d1) besitzt, und dass der erste größte Durchmesser (d1) größer als der zweite größte Durchmesser (d2) ist.

5. Klemme nach einem der Ansprüche 1 bis 4,
**dadurch gekennzeichnet, dass** der Verschluss (7) im Bereich des ersten Wandabschnitts (61) angeordnet ist.

6. Klemme nach einem der Ansprüche 1 bis 5,
**dadurch gekennzeichnet, dass** die Klemme (1) einteilig ausgebildet ist.

7. Klemme nach einem der Ansprüche 1 bis 6,
**dadurch gekennzeichnet, dass** die Klemme (1) zumindest teilweise aus Kunststoff ist.

8. Klemme nach einem der Ansprüche 1 bis 7,
**dadurch gekennzeichnet, dass** der Verschluss (7) eine Schnappverbindung mit einem männlichen, hakenförmigen Element (23) und einem weiblichen Element (24) ist, und dass das männliche Element (23) und das weibliche Element (24) im geschlossenen Zustand (31) zusammenwirken.

9. Klemme nach einem der Ansprüche 1 bis 8,
**dadurch gekennzeichnet, dass** die Nut (42) eine erste Nutwand (43) und eine zweite Nutwand (44) zur Aufnahme der Rippe (41) dazwischen umfasst, und dass die erste Nutwand (43) und die zweite Nutwand (44) in einer Ansicht in Richtung senkrecht zur Stirnseite (25, 26) überlappungsfrei zueinander angeordnet sind.

10. Klemme nach einem der Ansprüche 1 bis 9,
**dadurch gekennzeichnet, dass** die Klemme (1) im geschlossenen Zustand (31) zwischen dem ersten Ende (21) des ersten Teilwandabschnitts (65) und dem zweiten Ende (22) des zweiten Teilwandabschnitts (66) einen Spalt (45) aufweist, dass die Klemme (1) ein Abstützelement (46) aufweist, und dass das Abstützelement (46) im geschlossenen Zustand (31) den Spalt (45) an zumindest einer Stelle in Umfangsrichtung (102) der Umfangswand (9) überbrückt.

11. Klemme nach einem der Ansprüche 1 bis 10,
**dadurch gekennzeichnet, dass** die Klemme (1) Mittel (51) zur Änderung einer Länge (S) der Klemme (1) in Umfangsrichtung (102) der Umfangswand (9) aufweist.

12. Klemme nach einem der Ansprüche 1 bis 11,
**dadurch gekennzeichnet, dass** die Klemme (1) am Innenumfang (14) des ersten Aufnahmebereichs (11) mindestens zwei Anlagebereiche (52, 53) zur Anlage am Träger (3) aufweist, dass die Klemme eine Mittelachse (100) besitzt, die sich von der einen Stirnseite (25, 26) zur anderen Stirnseite (25, 26) erstreckt, dass die Anlagebereiche (52, 53) zumindest im geschlossenen Zustand (31) der Klemme (1) einen ersten Abstand (a1) zur Mittelachse (100) aufweisen, der kleiner als ein zweiter Abstand (a2) eines Federabschnitts (54, 55) zur Mittelachse (100) ist, wobei der Federabschnitt (54, 55) in Umfangsrichtung (102) der Umfangswand (9) zwischen den Anlagebereichen (52, 53) am Innenumfang (14) des ersten Aufnahmebereichs (11) angeordnet ist.

13. Klemme nach Anspruch 12,
**dadurch gekennzeichnet, dass** die Anlagebereiche (52, 53) durch Erhebungen (56, 57) an der Umfangswand (9) der Klemme (1) ausgebildet sind, wobei die Erhebungen (56, 57) in Richtung (105) vom Innenumfang (14) des ersten Aufnahmebereichs (11) auf die Mittelachse (100) gegenüber der Umfangswand (9) hervorstehen.

14. Klemme nach einem der Ansprüche 1 bis 13,
**dadurch gekennzeichnet, dass** die Klemme (1) eine Fixierungsrippe (71) zum Eingriff zwischen Rippen (72) des länglichen Elements (2) und zur Fixierung des länglichen Elements (2) gegenüber einer Bewegung in Richtung von einer Stirnseite (25, 26) zur anderen Stirnseite (25, 26) aufweist, und dass die Fixierungsrippe (71) am Innenumfang (15) des zweiten Aufnahmebereichs (12) angeordnet ist und in Richtung (103) vom Innenumfang (15) des zweiten Aufnahmebereichs (12) auf die Mittelachse (100) der Klemme (1), die sich von einer Stirnseite (25, 26) der Klemme (1) zur anderen Stirnseite (25, 26) der Klemme (1) erstreckt, gegenüber dem Innenumfang (15) hervorsteht.

15. Arbeitsgerät mit einem Träger (3) und mit einem länglichen Element (2), **dadurch gekennzeichnet, dass** das längliche Element (2) mittels einer Klemme (1) nach einem der Ansprüche 1 bis 14 am Träger (3) befestigt ist.

## Claims

1. Clamp for fastening an elongate element (2) to a carrier (3), in particular the carrier (3) of a work apparatus (4), wherein the clamp (1) has a first receiving region (11) for the carrier (3) and a second receiving region (12) for the elongate element (2), wherein the clamp (1) has a first front end (25) and a second front end (26), a peripheral wall (9) extending therebetween, wherein the first receiving region (11) is delimited by a first wall section (61) of the peripheral wall (9), wherein the second receiving region (12) is delimited by a second wall section (62) of the peripheral wall (9), wherein the first wall section (61) and the second wall section (62) are mutually contiguous at two connecting locations (63, 64), wherein the first receiving region (11) and the second receiving region (12) between the connecting locations (63, 64) are connected to one another and conjointly form a single receiving space (10), wherein the peripheral wall (9) in the closed state (31) of the clamp (1) extends in a fully encircling manner about the receiving space (10), and wherein one of the wall sections (61, 62) has two partial wall sections (65, 66), the ends (21, 22) thereof forming a closure (7) for releasably connecting the partial wall sections (65, 66),
**characterized in that** the first end (21) of the first partial wall section (65) has a rib (41), **in that** the second end (22) of the second partial wall section (66) has a groove (42), and **in that** the rib (41) in the closed state (31) of the clamp (1) engages in the groove (42) such that a movement of the first end (21) of the first partial wall section (65) of the clamp (1) in relation to the second end (22) of the second partial wall section (66) of the clamp (1) in the direction from the one front end (25, 26) to the other front end (25, 26) is delimited.

2. Clamp according to Claim 1,
**characterized in that** the first receiving region (11) and the second receiving region (12) between the connecting locations (63, 64) of the wall sections (61, 62) are connected to one another by way of a constricted location (13) of the receiving space (10).

3. Clamp according to Claim 2,
**characterized in that** the clamp (1) possesses a width (U), measured at the constricted location (13) of the receiving space (10) in a plane parallel to the front end (25, 26) between the connecting locations (63, 64) of the wall sections (61, 62), **in that** the second receiving region (12) possesses a second maximum diameter (d2), measured parallel to the width (U), and **in that** the second maximum diameter (d2) is at least as large as the width (U).

4. Clamp according to Claim 3,
**characterized in that** the first receiving region (11) possesses a first maximum diameter (d1), measured parallel to the width (U), and **in that** the first maximum diameter (d1) is larger than the second maximum diameter (d2).

5. Clamp according to one of Claims 1 to 4,
**characterized in that** the closure (7) is disposed in the region of the first wall section (61).

6. Clamp according to one of Claims 1 to 5,
**characterized in that** the clamp (1) is integrally configured.

7. Clamp according to one of Claims 1 to 6,
**characterized in that** the clamp (1) is at least partially made from plastics material.

8. Clamp according to one of Claims 1 to 7,
**characterized in that** the closure (7) is a snap-fit connection having a male hook-shaped element (23) and a female element (24), and **in that** the male element (23) and the female element (24) interact in the closed state (31).

9. Clamp according to one of Claims 1 to 8,
**characterized in that** the groove (42) comprises a first groove wall (43) and a second groove wall (44) for receiving therebetween the rib (41), and **in that** the first groove wall (43) and the second groove wall (44) in a view in the direction perpendicular to the front end (25, 26) are mutually disposed without an overlap.

10. Clamp according to one of Claims 1 to 9,
**characterized in that** the clamp (1) in the closed state (31) between the first end (21) of the first partial wall section (65) and the second end (22) of the second partial wall section (66) has a gap (45), **in that** the clamp (1) has a support element (46), and **in that** the support element (46) in the closed state (31) bridges the gap (45) at at least one location in the peripheral direction (102) of the peripheral wall (9).

11. Clamp according to one of Claims 1 to 10,
**characterized in that** the clamp (1) has means (51) for modifying a length (S) of the clamp (1) in the peripheral direction (102) of the peripheral wall (9).

12. Clamp according to one of Claims 1 to 11,
**characterized in that** the clamp (1) on the inner periphery (14) of the first receiving region (11) has at least two contact regions (52, 53) for bearing on the carrier (3), **in that** the clamp possesses a centre axis (100) which extends from the one front end (25, 26) to the other front end (25, 26), **in that** the contact regions (52, 53) at least in the closed state (31) of the clamp (1) have a first distance (a1) from the centre axis (100), said first distance (a1) being smaller than a second distance (a2) of a spring section (54, 55) from the centre axis (100), wherein the spring section (54, 55) in the peripheral direction (102) of the peripheral wall (9) is disposed between the contact regions (52, 53) on the inner periphery (14) of the first receiving region (11).

13. Clamp according to Claim 12,
**characterized in that** the contact regions (52, 53) are configured by elevations (56, 57) on the peripheral wall (9) of the clamp (1), wherein the elevations (56, 57) in relation to the peripheral wall (9) project in the direction (105) from the inner periphery (14) of the first receiving region (11) toward the centre axis (100).

14. Clamp according to one of Claims 1 to 13,
**characterized in that** the clamp (1) has a fixation rib (71) for engaging between ribs (72) of the elongate element (2) and for fixing the elongate element (2) in relation to a movement in the direction from one front end (25, 26) to the other front end (25, 26), and **in that** the fixation rib (71) is disposed on the inner periphery (15) of the second receiving region (12) and in relation to the inner periphery (15) projects in the direction (103) from the inner periphery (15) of the second receiving region (12) toward the centre axis (100) of the clamp (1) that extends from one front end (25, 26) of the clamp (1) to the other front end (25, 26) of the clamp (1).

15. Work apparatus having a carrier (3) and having an elongate element (2), **characterized in that** the elongate element (2) is fastened to the carrier (3) by means of a clamp (1) according to one of Claims 1 to 14.

## Revendications

1. Pince pour la fixation d'un élément allongé (2) à un support (3), notamment au support (3) d'un appareil de travail (4), la pince (1) comprenant une première zone de réception (11) pour le support (3) et une deuxième zone de réception (12) pour l'élément allongé (2), la pince (1) comprenant un premier côté frontal (25) et un deuxième côté frontal (26), entre lesquels s'étend une paroi circonférentielle (9), la première zone de réception (11) étant délimitée par une première section de paroi (61) de la paroi circonférentielle (9), la deuxième zone de réception (12) étant délimitée par une deuxième section de paroi (62) de la paroi circonférentielle (9), la première section de paroi (61) et la deuxième section de paroi (62) étant adjacentes l'une à l'autre au niveau de deux emplacements de liaison (63, 64), la première zone de réception (11) et la deuxième zone de réception (12) étant reliées l'une à l'autre entre les emplacements de liaison (63, 64) et formant ensemble un espace de réception unique (10), la paroi circonférentielle (9) s'étendant à l'état fermé (31) de la pince (1) tout autour de l'espace de réception (10), et une des sections de paroi (61, 62) comprenant deux sections de paroi partielles (65, 66), dont les extrémités (21, 22) forment une fermeture (7) pour la liaison détachable des sections de paroi partielles (65, 66),
**caractérisée en ce que** la première extrémité (21) de la première section de paroi partielle (65) comprend une nervure (41), **en ce que** la deuxième extrémité (22) de la deuxième section de paroi partielle (66) comprend une rainure (42), et **en ce qu'**à l'état fermé (31) de la pince (1), la nervure (41) pénètre dans la rainure (42) de telle sorte qu'un mouvement de la première extrémité (21) de la première section de paroi partielle (65) de la pince (1) par rapport à la deuxième extrémité (22) de la deuxième section de paroi partielle (66) de la pince (1) dans une direction allant d'un côté frontal (25, 26) vers l'autre côté frontal (25, 26) est limité.

2. Pince selon la revendication 1,
**caractérisée en ce que** la première zone de réception (11) et la deuxième zone de réception (12) sont reliées l'une à l'autre entre les emplacements de liaison (63, 64) des sections de paroi (61, 62) par l'intermédiaire d'un étranglement (13) de l'espace de réception (10).

3. Pince selon la revendication 2,
**caractérisée en ce que** la pince (1) possède une largeur (U) mesurée au niveau de l'étranglement (13) de l'espace de réception (10) dans un plan parallèle au côté frontal (25, 26) entre les emplacements de liaison (63, 64) des sections de paroi (61, 62), **en ce que** la deuxième zone de réception (12) possède un deuxième diamètre maximal (d2) mesuré parallèlement à la largeur (U), et **en ce que** le deuxième diamètre maximal (d2) est au moins aussi grand que la largeur (U).

4. Pince selon la revendication 3,
**caractérisée en ce que** la première zone de réception (11) possède un premier diamètre maximal (d1) mesuré parallèlement à la largeur (U), et **en ce que** le premier diamètre maximal (d1) est plus grand que le deuxième diamètre maximal (d2).

5. Pince selon l'une quelconque des revendications 1 à 4,
**caractérisée en ce que** la fermeture (7) est agencée dans la zone de la première section de paroi (61).

6. Pince selon l'une quelconque des revendications 1 à 5,
**caractérisée en ce que** la pince (1) est configurée d'un seul tenant.

7. Pince selon l'une quelconque des revendications 1 à 6,
**caractérisée en ce que** la pince (1) est au moins partiellement en matière plastique.

8. Pince selon l'une quelconque des revendications 1 à 7,
**caractérisée en ce que** la fermeture (7) est une liaison par encliquetage munie d'un élément mâle en forme de crochet (23) et d'un élément femelle (24), et **en ce que** l'élément mâle (23) et l'élément femelle (24) coopèrent à l'état fermé (31).

9. Pince selon l'une quelconque des revendications 1 à 8,
**caractérisée en ce que** la rainure (42) comprend une première paroi de rainure (43) et une deuxième paroi de rainure (44) pour la réception de la nervure (41) entre elles, et **en ce que** la première paroi de rainure (43) et la deuxième paroi de rainure (44) sont agencées sans se chevaucher telles que vues dans la direction perpendiculaire au côté frontal (25, 26).

10. Pince selon l'une quelconque des revendications 1 à 9,
**caractérisée en ce que** la pince (1) présente, à l'état fermé (31), une fente (45) entre la première extrémité (21) de la première section de paroi partielle (65) et la deuxième extrémité (22) de la deuxième section de paroi partielle (66), **en ce que** la pince (1) comprend un élément de support (46), et **en ce que** l'élément de support (46) comble à l'état fermé (31) la fente (45) à au moins un emplacement dans la direction circonférentielle (102) de la paroi circonférentielle (9).

11. Pince selon l'une quelconque des revendications 1 à 10,
**caractérisée en ce que** la pince (1) comprend des moyens (51) pour modifier une longueur (S) de la pince (1) dans la direction circonférentielle (102) de la paroi circonférentielle (9).

12. Pince selon l'une quelconque des revendications 1 à 11,
**caractérisée en ce que** la pince (1) comprend, sur la circonférence intérieure (14) de la première zone de réception (11), au moins deux zones d'application (52, 53) destinées à s'appliquer contre le support (3), **en ce que** la pince possède un axe médian (100) qui s'étend à partir d'un côté frontal (25, 26) jusqu'à l'autre côté frontal (25, 26), **en ce que** les zones d'application (52, 53) présentent, au moins à l'état fermé (31) de la pince (1), un premier écartement (a1) par rapport à l'axe médian (100), qui est inférieur à un deuxième écartement (a2) d'une section de ressort (54, 55) par rapport à l'axe médian (100), la section de ressort (54, 55) étant agencée dans la direction circonférentielle (102) de la paroi circonférentielle (9) entre les zones d'application (52, 53) sur la circonférence intérieure (14) de la première zone de réception (11).

13. Pince selon la revendication 12,
**caractérisée en ce que** les zones d'application (52, 53) sont formées par des élévations (56, 57) sur la paroi circonférentielle (9) de la pince (1), les élévations (56, 57) faisant saillie par rapport à la paroi circonférentielle (9) dans la direction (105) allant de la circonférence intérieure (14) de la première zone de réception (11) vers l'axe médian (100).

14. Pince selon l'une quelconque des revendications 1 à 13,
**caractérisée en ce que** la pince (1) comprend une nervure de fixation (71) pour l'engagement entre des nervures (72) de l'élément allongé (2) et pour la fixation de l'élément allongé (2) contre un mouvement dans une direction allant d'un côté frontal (25, 26) vers l'autre côté frontal (25, 26), et **en ce que** la nervure de fixation (71) est agencée sur la circonférence intérieure (15) de la deuxième zone de réception (12) et fait saillie par rapport à la circonférence intérieure (15) dans la direction (103) allant de la circonférence intérieure (15) de la deuxième zone de réception (12) vers l'axe médian (100) de la pince (1), qui s'étend à partir d'un côté frontal (25, 26) de la pince (1) jusqu'à l'autre côté frontal (25, 26) de la pince (1).

15. Appareil de travail muni d'un support (3) et muni d'un élément allongé (2), **caractérisé en ce que** l'élément allongé (2) est fixé au support (3) au moyen d'une pince (1) selon l'une quelconque des revendications 1 à 14.
